(19) Europäisches Patentamt
European Patent Office
Office européen des brevets

(11) **EP 1 767 962 A1**

(12) **EUROPEAN PATENT APPLICATION**
published in accordance with Art. 158(3) EPC

(43) Date of publication:
**28.03.2007 Bulletin 2007/13**

(51) Int Cl.:
*G02B 5/02* (2006.01)    *G02F 1/1335* (2006.01)

(21) Application number: **05751313.7**

(22) Date of filing: **14.06.2005**

(86) International application number:
**PCT/JP2005/010836**

(87) International publication number:
**WO 2005/124399 (29.12.2005 Gazette 2005/52)**

(84) Designated Contracting States:
**AT BE BG CH CY CZ DE DK EE ES FI FR GB GR HU IE IS IT LI LT LU MC NL PL PT RO SE SI SK TR**

(30) Priority: **18.06.2004 JP 2004180702**

(71) Applicant: **TORAY INDUSTRIES, INC.**
**Tokyo 103-8666 (JP)**

(72) Inventors:
• **TAKAHASHI, Kozo**
**5200842 (JP)**

• **KIKUCHI, Akikazu;**
**Otsu-shi, Shiga;**
**5200842 (JP)**

• **TAKAHASHI, Hiromitsu**
**5202145 (JP)**

(74) Representative: **Kador & Partner**
**Corneliusstrasse 15**
**80469 München (DE)**

(54) **ANISOTROPIC DIFFUSION FILM**

(57)    A novel anisotropic diffusion film has a high brightness, high luminance uniformity ratio and a high productivity, and is suitable essentially for a surface light source of planar display devices for liquid crystal display devices and the like, such as a direct backlight. In the anisotropic diffusion film, a stripe-shaped convex lens is formed on one surface of a substrate film. The cross sectional shape of a plane vertical to the stripe direction satisfies the following conditions that (A-C) and the whole of light transmittance of the anisotropic diffusion film is 70% or more. A: The contour of the projecting part of the cross sectional shape is a curved line. B: The aspect ratio of the projecting part of the cross sectional shape is 1 or more but not more than 3. C: the distance between the apexes of the adjacent projecting parts of the cross sectional shape is 10 $\mu$m or more but not more than 100 $\mu$m.

Fig. 1

## Description

Technical Field

The present invention relates to an anisotropic diffusion film, and in particular, an anisotropic diffusion film suitable for a surface light source of planar display devices for liquid crystal display devices and the like.

In the present invention, the anisotropic diffusion film means a film where the distribution of the diffused light passing through the film is anisotropic when the incident light vertically enters into the film. Namely, it means a film in which the distribution of diffusion light on any plane including the axis of the incident light (here, this any plane has a vertical relationship to the film surface) is different from the distribution of diffusion light on a plane which is vertical to said plane and includes the axis of the incident light.

Background Art

These years, the large numbers of displays using liquid crystal are employed in computers, television sets or portable telephones as display devices.

These liquid crystal displays, as they are not illuminant themselves, permit to display by irradiating light from the backside by means of a surface light source. As for surface light source, the structure of surface light source called side light type backlight or direct backlight is adopted to meet the demand of not only irradiating light but also uniformly irradiating the entire screen.

Among them, in the direct backlight used for television set or the like, generally, a plurality of lamps disposed in parallel and a milky-white diffusion plate on the top side of the lamps are installed, and moreover, diffusion sheets, prism sheets and so on are arranged fittingly. As for milky-white diffusion plates, the diffusion plates or the like where diffusive particles are distributed in acryl resin and so on are representative, and, in the direct backlight, they have an effect to reduce the image of lamps installed on the back face and improve luminance uniformity ratio.

On the other hand, the demand of brighter surface light sources (demand of higher brightness) is always increasing and, as means thereof, for instance, there exist methods for increasing the number of lamps, for raising the output and so on; however, these methods are as much factors of cost increase and they are also inefficient.

Besides, proposals concerning the anisotropic diffusion film are made, to satisfy the aforementioned demand of higher brightness. To be more specific, those provided with cylindrical lens parts in stripe shapes (refer to the patent document 1), those in which rod-like bubbles are distributed (refer to the patent document 2), those provided with longitudinally split spindle shapes (refer to the patent document 2) and so on are proposed.

Patent document 1: Japanese patent application (JP-A) No. 2002-62528

Patent document 2: Japanese patent application (JP-A) No. 2002-98810

Patent document 3: Japanese patent application (JP-A) No. 2002-107510

Nevertheless, in actuality, none of the conventional milky-white diffusion plate or the aforementioned proposal is provided with both sufficiently high brightness and luminance uniformity ratio especially in the direct backlight and, none of them manages both high productivity and high cost performance.

Disclosure of Invention

In view of these points, the object of the present invention consists in providing a novel anisotropic diffusion film.

In order to solve the aforementioned problems, the anisotropic diffusion film of the present invention has the following composition.

Namely, it concerns an anisotropic diffusion film, wherein a stripe-shaped convex lens is formed on one surface of a substrate film, the cross sectional shape of a plane which is vertical to the stripe direction satisfies the following conditions that A to C, and the whole of light transmittance is 70% or higher.

A. The contour of the projecting part of the cross sectional shape is a curved line.

B. The aspect ratio of the projecting part of the cross sectional shape is 1 or more but not more than 3.

C. The distance between the apexes of the adjacent projecting parts of the cross sectional shape is 10$\mu$m or more but not more than 100$\mu$m.

According to the present invention, a novel anisotropic diffusion film provided with high brightness, high luminance uniformity ratio and high productivity can be obtained.

Brief Description of Drawings

Fig. 1 shows a schematic cross sectional perspective view of an anisotropic diffusion film according to one embodiment of the present invention; and

Fig. 2 shows a schematic cross sectional view of an anisotropic diffusion film according to the different embodiment from Fig. 1.

Description of Symbols

1. Substrate sheet
2. Stripe-shaped convex lens
3. Projecting parts of the stripe-shaped convex lens

Best Mode for Carrying Out the Invention

The anisotropic diffusion film of the present invention has a basic structure wherein a stripe-shaped convex lens is formed on one surface of a substrate film. And, the cross sectional shape of a plane vertical to the stripe direction of the stripe-shaped convex lens part satisfies the following three requirements A, B and C, and the whole of light transmittance is 70% or higher.

A. The contour of the projecting part of the cross sectional shape is a curved line.
B. The aspect ratio of the projecting part of the cross sectional shape is not less than 1 and not more than 3.
C. The distance between the apexes of the adjacent projecting parts of the cross sectional shape is not less than $10\mu$m and not more than $100\mu$m.

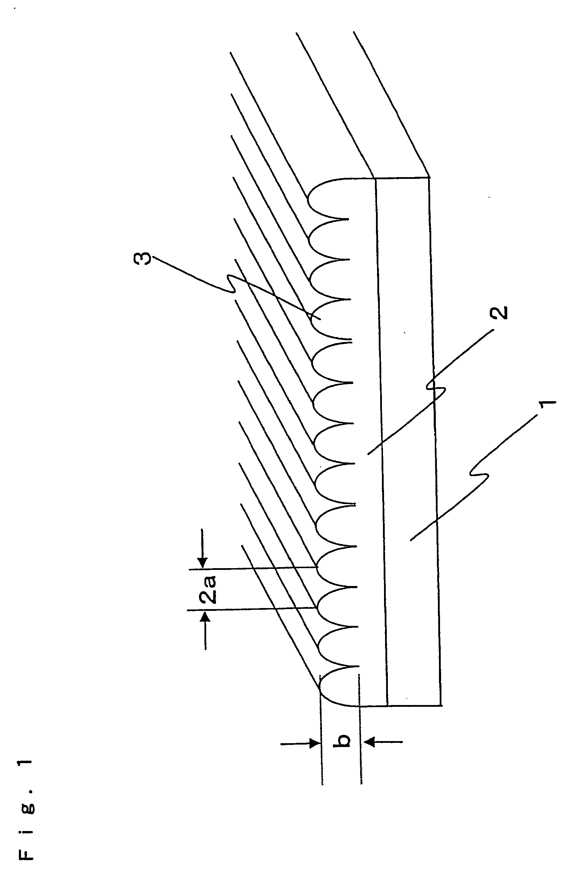

Fig. 1 shows a schematic cross section perspective view of an anisotropic diffusion film according to one embodiment of the present invention. In Fig. 1, 1 is a substrate sheet, a stripe-shaped convex lens of 2 is formed thereon, while 3 are projecting parts of the stripe-shaped convex lens.

In the present invention, it is necessary that the aspect ratio of the projecting part of the cross sectional shape, which composes the stripe-shaped convex lens, is not less than 1 and not more than 3.

Here, the "stripe-shaped convex lens" is the one where a plurality of projecting parts are arranged on the cross section thereof, and the contour of the projecting parts basically forms a curved line, preferably semicircular (circular arc) or semi oval curved line.

Also, in the present invention, the "aspect ratio" is a ratio (b/a) of the half distance a of the distance between apexes of the projecting parts of the cross sectional shape and the height b of the projecting part. Namely, the distance between apexes of the projecting parts of the cross section of parts composing the stripe-shaped convex lens has a relation to be double of a and, in Fig. 1, the distance between apexes is indicated with 2a. The aspect ratio is, preferably, not less than 1.5 and not more than 2.5. By keeping the aspect ratio in said range, it becomes possible to give sufficiently high brightness and luminance uniformity ratio to the direct backlight.

If this aspect ratio is less than 1, the luminance uniformity ratio advancement effect becomes poor, and making the use as direct backlight member is difficult. On the other hand, if the aspect ratio is more than 3, increasing back scattered light and light leak to the side and lowering the brightness make difficult to use as direct backlight member.

Moreover, in the present invention, the distance between apexes 2a of the projecting parts is required to be not less than $10\mu$m and not more than $100\mu$m and, preferably, not less than $20\mu$m and not more than $50\mu$m.

If this distance of apexes 2a of the projecting parts is less than $10\mu$m, color unevenness by the spectrum and moire with the liquid crystal cell are generated easily, making the use as direct backlight member difficult. In addition, if the distance of apexes 2a of the projecting parts is more than $100\mu$m, the stripe-shaped lens becomes thicker more than necessary, and it is undesirable to cause the deterioration of the planarity by film warping or curling, decreasing the productivity and increasing the cost.

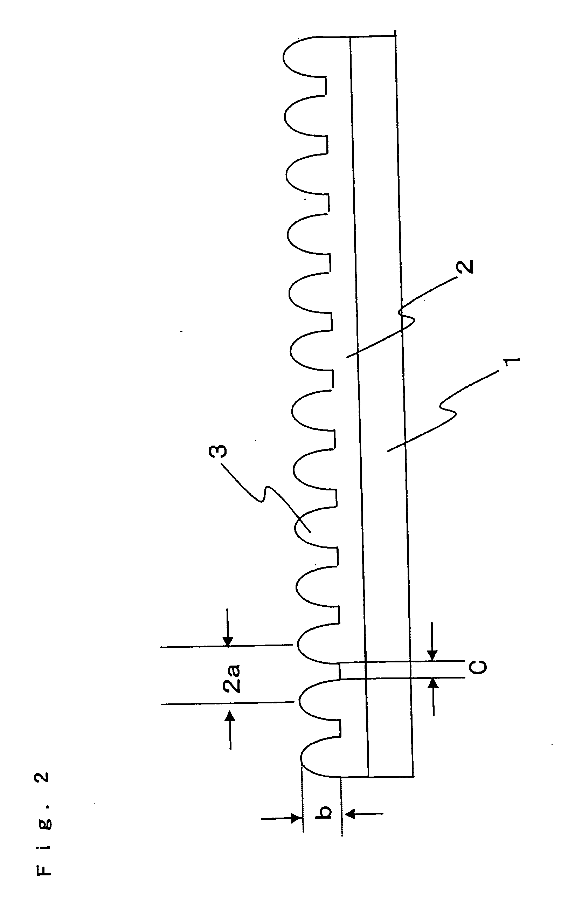

Besides, in the present invention, the distance c of a flat part between adjacent projecting parts of the stripe-shaped convex lens illustrated in Fig.2 is advantageously not more than $3\mu$m to enhance the diffuser efficiency and obtain a high luminance uniformity ratio and, preferably, not more than $2\mu$m and most preferably, not more than $1.5\mu$m. If the distance c is more than $3\mu$m, light amount goes straight to pass through is increased, lowering the diffusing behavior, reducing the light diffusion performance as diffusion film, which is undesirable for certain applications.

In addition, in case where there is a flat part between adjacent projecting parts, said aspect ratio is a value represented by $\{b/(a-(c/2))\}$.

Also, in the present invention, the anisotropic diffusion film may be made by laminating to two layers A and B different in polymer skeleton, glass transition temperature and fusion point, such as A/B, A/B/A or the like, and it is preferable to give a projecting shape to any one of layers A and B, especially in the composition of A/B. In case of composing with such lamination layers, the aforementioned the whole of light transmittance is obtained its measurement value for the entire lamination composition.

In the aforementioned anisotropic diffusion film of the present invention, though not especially limited, it is preferably made essentially of polyester.

Polyester, which is used preferably for composing the anisotropic diffusion film of the present invention, is the general denomination of high-molecular compounds having essential bonds in the main chain as ester bond and can be obtained, normally, by polycondensation reaction of dicarboxylic acid component and glycol component. Here, the dicarboxylic acid component includes terephthalic acid, naphthalene dicarboxylic acid, isophthalic acid, diphenyl dicarboxylic acid, diphenyl sulfone dicarboxylic acid, difenoxyethane dicarboxylic acid, 5-sodium sulfone dicarboxylic acid, phthalic acid or other aromatic dicarboxylic acids, oxalic acid, succinic acid, adipic acid, sebacic acid, dimer acid, maleic acid, fumaric acid or other aliphatic dicarboxylic acids, cyclohexane dicarboxylic acid or other cycloaliphatic dicarboxylic acids, and p-hydroxybenzoate or other oxy carboxylic acids and so on. On the other hand, the glycol component includes, for instance, ethylene glycol, propanediol, butanediol, pentanediol, hexanediol, neopentylglycol or other aliphatic glycols, diethylene glycol, polyethylene glycol, polypropylene glycol or other polyoxy alkylene glycols, cyclohexane dimethanol or other cycloaliphatic glycols, and bisphenol A, bisphenol S or other aromatic glycols.

Besides, polyester which is used preferably for composing the anisotropic diffusion film of the present invention may be polyester copolymers using two or more kinds of the aforementioned dicarboxylic acid component and/or glycol component.

In the anisotropic diffusion film of the present invention, the substrate film thereof is preferably made substantially of polyester and the proportion of polyester in the film is preferably 90mass% or more and more preferably 95mass% or more. If the proportion of polyester is 90mass% or more, the film can be made more excellent in heat resistance and long term stability. Hereinafter, those films made substantially of polyester shall be called simply polyester film.

In case of using a polyester film as the substrate film, for subsidiarily controlling the diffusing behavior, the polyester film may include different polymers, particles and so on. As said polymers and particles, organic silicone resin, polystyrene resin, polyolefin resin, polyester resin or other thermoplastic resins, glass, silica, barium sulfate, titanium oxide, magnesium sulfate, magnesium carbonate, calcium carbonate or other inorganic fine particles can be cited as example.

In the present invention, the preferable use of polyester as substrate film and, moreover, the addition of particles into the polyester film is preferable for improving the slipperiness and the blocking resistance and, as for particles to be added, inorganic particles, organic particles or the like can be used.

As inorganic particle, for instance, silica, colloidal silica, alumina, alumina sol, kaolin, talc, mica, calcium carbonate and so on can be used. The average particle diameter of inorganic particle to be used is preferably 0.005 to 5$\mu$m, more preferably 0.01 to 3$\mu$m and especially preferably 0.02 to 2$\mu$m. If the average particle diameter is less than 0.005$\mu$m, the effect of slipperiness or blocking resistance may not appear sufficiently. Also, if the average particle diameter exceeds 5$\mu$m, they may be recognized as optical defects, or unnecessary diffusion and decrease of transmittance may be provoked.

In case of using polyester film as substrate film, it is preferable to use those presenting a glass transition temperature of 60°C or more from the point of long term stability or the like and heat resistance, more preferably those presenting a glass transition temperature of 70°C or more, and especially preferably 80°C or more. This is because, if the glass transition temperature is inferior to 60°C, the transmittance and the anisotropy after a long term storage change and the inconveniences such as insufficient development of properties may be provoked. Besides, the glass transition temperature is preferably equal or inferior to 150°C from the point of balance among polyester stretchability, productivity, heat resistance and moldability.

Moreover, resin composing the stripe-shaped convex lens in the present invention is preferably polyester from the point of productivity and adoption of thermal imprint (thermal emboss) process.

Also, as resin composing the stripe-shaped convex lens, if acrylic resin, epoxy resin, urethane resin or the like is deposited on the substrate film, UV using optical imprint (the resin is cured by irradiating ultraviolet all the way die transferring the coat resin) can be adopted and, moreover, a method combining thermal imprint and optical imprint can be adopted.

Concretely, the resin composing the stripe-shaped convex lens is preferably transparent, and as for the resin, it is preferable to be made of any one of the aforementioned polyester resin, poly(meth)acrylic acid and poly(meth)acrylic acid ester or other acrylic resins and their copolymers, epoxy and its copolymers, epoxy urethane resin or other epoxy resins, urethane based resins, or mixed components thereof, and it may be ultraviolet-curable type.

As for monomer or copolymerization component of these transparent resins, though not limited, for instance, there exist polyalcohols, trimethylol propane tri(meth)acrylate, hexanediol(meth)acrylate, tri propylene glycol di(meth) acrylate, diethylene glycol di(meth)acrylate, pentaerythritol tri(meth) acrylate, dipentaerythritol hexa (meth) acrylate, 1, 6 hexanediol di(meth) acrylate, neopentyl glycol di(meth) acrylate, and so on; however, it is not limited to them.

As for ultraviolet-curable type, there exist those mixed conveniently with prepolymers, oligomers and/or monomers having polymerizable unsaturated bonds or epoxy groups in their molecular. Examples of prepolymer and oligomer in the ultraviolet-curable resin composition include condensates of unsaturated dicarboxylic acid and polyalcohol or other unsaturated polyesters, polyester methacrylate, polyether methacrylate, polyol methacrylate, melamine methacrylate or other methacrylates, polyester acrylate, epoxy acrylate, urethane acrylate, polyether acrylate, polyol acrylate, melamine acrylate or other acrylates, cation polymerization type epoxy compounds. Among others, in the present invention, a preferable example of the resin composing the ultraviolet-curable is a resin layer made of at least one kind or two or more kinds selected from a group comprising acryl based resins, epoxy based resins and urethane based resins.

Moreover, in the anisotropic diffusion film of the present invention, various forms can be given to the surface opposite to the surface composing the stripe-shaped convex lens and, in case of giving fine forms to both surfaces in this manner, it is desirable to adopt the thermal imprint method as one method.

The anisotropic diffusion film of the present invention being used by integrating into a liquid crystal display, it is desirable that the whole of light transmittance does not change so much, even after being exposed to the heat radiated from the liquid crystal display lamp. There, in the present invention, the change rate of the whole of light transmittance after hot air treatment at 80°C during 500hours is preferably 3% or less and more preferably 2% or less. Here, the change rate is a value obtained by $(|Tb-Ta|)/Tb \times 100(\%)$, where $Tb$ is the whole of light transmittance before the treatment and $Ta$ is the whole of light transmittance after the treatment.

In case where the resin composing the protruded stripe-shaped lens is made of polyester, the glass transition temperature is preferably 80 °C or more, more preferably 90°C or more, and most preferably 100°C or more, to limit the change rate of the whole of light transmittance hot air treatment at 80°C during 500 hours to 3% or less. In addition, the intrinsic viscosity is preferably 0.7dl/g or more, to permit suppressing the decrease of resin transmittance due to the crystallization progress, and moreover, resin embrittlement by exposing heat air for a long time. The intrinsic viscosity is more preferably 0.8dl/g or more, and not more than 1.2dl/g.

In the present invention, from the point of stiffness and processability of the film, the thickness of the anisotropic diffusion film is preferably 75 to 500μm, more preferably 150 to 400μm, and especially preferably 200 to 350μm.

In case of using polyester as anisotropic diffusion film of the present invention, the polyester may be mixed with various additives, such as, antioxidant, heat-resistant stabilizer, weathering stabilizer, ultraviolet absorber, organic slip property, pigment, dye, filler, antistatic agent and nucleating agent, within a range not to affect the effect of the present invention.

Moreover, in case of using polyester as anisotropic diffusion film of the present invention, the transmission b value is preferably not more than 1.5, and more preferably not less than 1.0. If the transmission b value exceeds 1.5, it makes the film look yellowish, and when such a film is applied to the surface of a display device, it may give an impression of deterioration or discoloration, and it is undesirable to integrate such a film into a display device, because it may impair the balance of color tone. Besides, the transmission b value is preferably -0.5 or more. This is because, if the transmission b value is less than -0.5, it makes the film look bluish-black, and when such a film is applied to the surface of a display device, it may give a dark impression, and it is undesirable to integrate such a film into a display device, because it may impair the balance of color tone and the brightness. The film color tone also can be adjusted within the stable range of film forming process, by the color tone of the raw material itself, nature or thickness of the laminated film to be formed on the film surface layer. However, it is important to set at the lowest temperature for melt extrusion of polyester and minimize the disparity of the temperature thereof.

Also, for the anisotropic diffusion film of the present invention, it is necessary that the whole of light transmittance is 70% or more. The whole of light transmittance is preferably 80% or more and more preferably 85% or more. Here, the whole of transmittance is a value when light is made incident from a surface to which the protruding cross section is given. Also, it is essential to reduce and control bubbles and particles that would provoke back scattering for setting the whole of light transmittance to the range.

In the present invention, the method of forming a projecting shape on the film surface into one-directional striped-shape is preferably a method of heating the film as necessary and transferring with a die and a flat plate, or a method of imparting the shape by pressing between a die role and a role. The substrate being substantially polyester film, this method allows obtaining a high productivity and reliability.

Moreover, as necessary, the substrate film may be coated with acrylic resin, epoxy resin, urethane resin or the like, and an optical imprint using ultraviolet(cure the resin by irradiating ultraviolet all the way die transferring the coat resin) may also be adopted, and moreover, a method combining the thermal imprint and the optical imprint may be adopted.

Also, in the present invention, the surface roughness of the projecting apex part is not more than 1μm from the point of improving brightness and luminance uniformity ratio (reduction of uneven brightness) and more preferably , not more than 0.5μm.

Next, a manufacturing method of the anisotropic diffusion film of the present invention shall be described; however, the present invention shall not be limited to the same.

Copolyester and polyethylene terephthalate, which are contained predetermined inorganic particle, are carried out melt two-layer coextrusion by arbitrarily setting the laminate thickness ratio, and cooled with a mirror-finished casting drum by using the electrostatic casting method to obtain non-stretched two-layer laminated sheet. The two-layer laminated sheet is biaxially stretched in the longitudinal and transverse directions, and treated with heat to obtain a polyester film. After heat transfer molding with a die, by cooling, the anisotropic diffusion film can be obtained in order to form a stripe-shaped convex lens on the side of copolyester layer of the obtained polyester film.

The anisotropic diffusion film of the present invention can advantageously be used as diffusion sheet of displays, especially liquid crystal displays, or for a screen of the projection television or the like.

Examples

Now, the present invention shall be described referring to the examples, but the present invention is not necessarily limited by them. And, it should be noted that characteristics were measured and evaluated by the following methods.

(1) Glass transition temperature of polyester

After melting the samples scraped from a polyester film, then quenching, the melt point was obtained from the melting peak by measuring a differential scanning calorimeter (made by PerkinElmer, DSC2 type) at a temperature rising rate of 10 °C /min.

(2) Intrinsic viscosity of polyester

Polyester was disolved with ortho-chlorophenol and measured at 25 °C.

(3) The whole of light transmittance

The whole of light transmittance to the film thickness direction was measured by using a full automatic direct reading Hayes Computer HGM-2DP (made by SUGA Test Instruments Co., Ltd.). The measurement was executed on respective samples obtained by dividing a film into four of A4 size, and the average of these four measurements was obtained. Here, the incident surface shall be the surface to which the cross section of convex was given.

(4) Transmission b value

Transmission b was measured by the transmission method with a spectroscopic color-difference meter SE-2000 type (made by Nippon Denshoku Industry Co., Ltd.) according to JIS-K-7105.

(5) Brightness

An anisotropic film obtained on a transparent acrylic plate of 1 mm in thickness was installed (the shape providing surface being opposite to the light source) on a light source of 17-inch 8 direct type lamps (3 mm in diameter of lamp) so that the stripe and the lamp direction was parallel. Then, a diffusion film (GM3 made by Kimoto Co., Ltd.) and a prism sheet (BEF made by 3M Inc.) were arranged thereon.

A cold cathode-ray tube lamp is put on during 60 minutes and stabilized the light source, and then the brightness ($cd/m^2$) is measured by using a color luminance meter BM-7fast (made by Topcon Co., Ltd.).

The backlight surface of the central part of 10cm $\times$ 10cm is divided into nine of 3 $\times$ 3 zones, and the measurement is executed at 9 center points of respective areas, and the average thereof is taken as brightness.

The uneven brightness is also evaluated by the disparity the measurements at 9 points.

The uneven brightness (%) = (the maximum value in 9 points − the minimum value in 9 points)/(the average value of 9 points) $\times 100$

(6) Measurement of the shape of the projecting part

Cut the film without crushing in a plane vertical to the stripe direction with a microtome. Next, observe the cut cross section with an appropriate magnification and take pictures, by using a scanning electron microscope S-2100A (made by Hitachi Co., Ltd.). In 5 continuous projecting parts of the cross section, analyze the half distance a of the distance between the apexes of the projecting part, the height b of the projecting part and the distance c of a flat part between adjacent projecting parts, and obtain the average value.

This observation and photo shoot for arbitrary 10 points on the film are carried out, and the average value of respective values is obtained.

Example 1

Polyethylene terephthalate (SPG-PET, glass transition temperature 105°C, intrinsic viscosity 0.7dl/g) where 30mol of spiroglycol containing 0.05mass% spherical silica of $0.3\mu m$ in average particle diameter was copolymerized from an auxiliary extruder, and polyethylene terephthalate (PET, glass transition temperature 75°C) containing 0.1mass% spherical silica of $0.3\mu m$ in average particle diameter from a main extruder, were carried out melt two-layered co-extrusion, so that the lamination thickness ratio was SPG-PET/PET = 1/2. Then, a two-layered lamination sheet was made by cooling on a mirror-finished casting drum according to the electrostatic casting method. Thus, the obtained two-layered lamination sheet was simultaneously and biaxially stretched in three times in the longitudinal and transverse direction at 110°C and, thereafter, heat treatment was conducted at 235°C and during 15sec, to obtain a polyester film of $250\mu m$ in the whole of thickness of the film.

On the SPG-PET lamination surface of the obtained polyester film, a stripe-shaped convex lens of 1.52 in aspect ratio was transferred and molded at a heating temperature of 130°C and at a cooling temperature of 20°C by using a die of corresponding shape. Here, the half distance a of the distance between the apexes of the projecting parts was $50\mu m$, the height b of the projecting parts was $75\mu m$ and the distance c of a flat part between adjacent projecting parts was $1\mu m$.

An anisotropic film obtained on a transparent acrylic plate of 1 mm in thickness was installed (the surface provided stripe-shaped convex shape being opposite to the light source) on a light source of 17-inch 8 direct type lamps (3 mm in diameter of lamp) so that the stripe and the lamp direction was parallel. Then, a diffusion film (GM3 made by Kimoto Co., Ltd.) and a prism sheet (BEF made by 3M Inc.) were arranged theron.The obtained front brightness was high as 500cd/m$^2$, and the uneven brightness was satisfactory as 1%. Also, the screen color tone was satisfactory with less yellowness.

In addition, the change of transmittance of the obtained anisotropic diffusion film after treatment at 80°C and during 500 hours was confirmed to be good as 1.5%, which was hardly different from 84% in the whole of light transmittance of the initial film.

Example 2

Polyethylene terephthalate (SPG-PET, glass transition temperature 105°C, intrinsic viscosity 0.64dl/g) where 30mol of spiroglycol containing 0.05mass% spherical silica of $0.3\mu m$ in average particle diameter was copolymerized from an auxiliary extruder, and polyethylene terephthalate (PET, glass transition temperature 75°C) containing 0.1mass% spherical silica of $0.3\mu m$ in average particle diameter from a main extruder, were carried out melt two-layered co-extrusion, so that the lamination thickness ratio was SPG-PET/PET = 1/2. Then, a two-layered lamination sheet was made by cooling on a mirror-finished casting drum according to the electrostatic casting method. Thus, the obtained two-layered lamination sheet was simultaneously and biaxially stretched in three times in the longitudinal and transverse direction at 110°C and, thereafter, heat treatment was conducted at 235°C and during 15sec, to obtain a polyester film of $300\mu m$ in the whole of thickness of the film.

On the SPG-PET lamination surface of the obtained polyester film, a stripe-shaped convex lens of 2.04 in aspect ratio was transferred and molded at a heating temperature of 130°C and at a cooling temperature of 20°C by using a die of corresponding shape. Here, the half distance a of the distance between the apexes of the projecting parts was $50\mu m$, the height b of the projecting parts was $100\mu m$ and the distance c of a flat part between adjacent projecting parts was $2\mu m$.

A transparent acrylic plate of 1mm in thickness was installed on a light source of 17-inch 8 direct lamps (3mm in diameter of lamp), and the obtained anisotropic film was installed thereon(shape providing surface being opposite to the light source) so that the strip and the lamp direction was parallel, and thereon, a diffusion film (GM3 made by Kimoto Co., Ltd.) and a prism sheet (BEF made by 3M Inc.) were arranged to create a surface light source. The obtained front brightness was high as 540cd/m$^2$, and the uneven brightness was satisfactory as 0.5%. Also, the screen color tone was satisfactory with less yellowness.

In addition, the change of transmittance of the obtained anisotropic diffusion film after treatment at 80°C and during 500 hours was confirmed to be good as 1.7%, which was hardly different from 82% in the whole of light transmittance of the initial film.

Example 3

Polyethylene terephthalate (SPG-PET, glass transition temperature 105°C, intrinsic viscosity 0.71dl/g) where 30mol of spiroglycol containing 0.05mass% spherical silica of 0.3μm in average particle diameter was copolymerized from an auxiliary extruder, and polyethylene terephthalate (PET, glass transition temperature 75°C) containing 0.1mass% spherical silica of 0.3μm in average particle diameter from a main extruder, were carried out melt two-layered co-extrusion, so that the lamination thickness ratio was SPG-PET/PET = 1/2. Then, a two-layered lamination sheet was made by cooling on a mirror-finished casting drum according to the electrostatic casting method. Thus, the obtained two-layered lamination sheet was simultaneously and biaxially stretched in three times in the longitudinal and transverse direction at 110°C and, thereafter, heat treatment was conducted at 235°C and during 15sec, to obtain a polyester film of 250μm in the whole of thickness of the film.

On the SPG-PET lamination surface of the obtained polyester film, a stripe-shaped convex lens of 1.55 in aspect ratio was transferred and molded at a heating temperature of 130°C and at a cooling temperature of 20°C by using a die of corresponding shape. Here, the half distance a of the distance between the apexes of the projecting parts was 50μm, the height b of the projecting parts was 75μm and the distance c of a flat part between adjacent projecting parts was 3.5 μm.

A transparent acrylic plate of 1 mm in thickness was installed on a light source of 17-inch 8 direct lamps (3mm in diameter of lamp), and the obtained anisotropic film was installed thereon(shape provinding surface being opposite to the light source) so that the strip and the lamp direction was parallel, and thereon, a diffusion film (GM3 made by Kimoto Co., Ltd.) and a prism sheet (BEF made by 3M Inc.) were arranged to create a surface light source. The front brightness of the obtained surface light source was high as 500cd/m$^2$, and the uneven brightness was satisfactory as 1.8%. Also, the screen color tone was satisfactory with less yellowness.

In addition, the change of transmittance of the obtained anisotropic diffusion film after treatment at 80°C and during 500 hours was confirmed to be good as 1.5%, which was hardly different from 80% in the whole of light transmittance of the initial film.

Example 4

Product No. U426 film, optical polyester film of 188μm made by Toray Industries, Inc., was coated with acrylic based ultraviolet-curable monomer mixed liquid. A die was superposed on the coated surface to spread the coated acrylic based ultraviolet-curable monomer mixed liquid to all over the lens die.

Next, the acrylic based ultraviolet-curable monomer mixed liquid was polimerized and cured by irradiating with ultraviolet from a 6.4kW ultraviolet lamp of 80w/cm in irradiation intensity installed on the side of polyester film thereof. Next, the die was peeled off from the coated surface to form a striped-shape convex lens of 1.52 in aspect ratio made of acrylic resin of 1.59 in refractive index. Here, the half distance a of the distance of the apexes of the projecting parts was 50μm, the height b of the projecting parts was 75μm and the distance c of a flat part between adjacent projecting parts was 1μm.

An anisotropic film obtained on a transparent acrylic plate of 1 mm in thickness was installed (the shape providing surface being opposite to the light source) on a light source of 17-inch 8 direct type lamps (3 mm in diameter of lamp) so that the stripe and the lamp direction was parallel. Then, a diffusion film (GM3 made by Kimoto Co., Ltd.) and a prism sheet (BEF made by 3M Inc.) were arranged theron.The front brightness of the obtained the surface light source was high as 520cd/m$^2$, and the uneven brightness was satisfactory as 1.5%. Also, the screen color tone was satisfactory with less yellowness.

In addition, the change of transmittance of the obtained anisotropic diffusion film after treatment at 80°C and during 500 hours was confirmed to be good as 1.5%, which was hardly different from 94% in the whole of light transmittance of the initial film.

Example 5

Polyethylene terephthalate (CHD-PET, glass transition temperature 75°C) where 23mol of cycloxhexane dimethanol was copolymerized from an auxiliary extruder, and polyethylene terephthalate (PET, glass transition temperature 75°C) from a main extruder, were carried out melt two-layered co-extrusion, so that the lamination thickness ratio was CHD-PET/PET = 1/4. Then, a two-layered lamination sheet was made by cooling on a mirror-finished casting drum according to the electrostatic casting method. Thus, the obtained two-layered lamination sheet was stretched in 3.2times in the longitudinal direction at 95°C and following this, the mono-axially stretched film was treated with corona discharge in the air, and the treated surface was applied with the following coating liquid by the bar coating method using a metalling bar.

The mono-axially stretched film coated with this coating liquid is introduced into a tenter by clipping both ends thereof, pre-heated at 110°C in the pre-heating zone, stretched in 3.3 times in transverse direction in the stretching zone at 125°C, thereafter, heat treatment was conducted at 235°C and during 15sec, to obtain a polyester film of 250$\mu$m in the whole of thickness of the film.

On the CHD-PET lamination surface of the obtained polyester film, a stripe-shaped convex lens of 1.52 in aspect ratio was transferred and molded at a heating temperature of 110°C and at a cooling temperature of 20 °C by using a die of corresponding shape. Here, the half distance a of the distance between the apexes of the cross section of convex was 50$\mu$m, the height b of the convex was 75$\mu$m and the distance c of a flat part adjacent to the stripe-shaped convex lens was 1 $\mu$m.

An anisotropic film obtained on a transparent acrylic plate of 1 mm in thickness was installed (the shape providing surface being opposite to the light source) on a light source of 21-inch 10 direct type lamps (3 mm in diameter of lamp) so that the stripe and the lamp direction was parallel. Then, a diffusion film (GM3 made by Kimoto Co., Ltd.) and a prism sheet (BEF made by 3M Inc.) were arranged theron.The front brightness of the obtained the surface light source was high as 500cd/m$^2$, and the uneven brightness (quotient of the difference between the maximum brightness and the minimum brightness divided by the average brightness)was satisfactory as 1% per square inch. Also, the screen color tone was satisfactory with less yellowness.

In addition, the change of transmittance of the obtained anisotropic diffusion film after treatment at 80°C and during 500 hours was confirmed to be good as 2.8%, which was not greatly different from 91% in the whole of light transmittance of the initial film.

As for the coating liquid forming the coated layer, the following antistatic agent C and binder resin D was mixed by antistatic agent C/binder resin D = 30/70 as a solid content mass ratio and diluted with water to make the solids contents 4 mass %.

C. Antistatic agent: polystyrene lithium sulfonate saline water dispersions (molecular weight = about 70thousands)

D. Binder resin: acryl emulsion (copolymer of acryl component: methyl methacrylate/ethyl acrylate/acrylic acid/N-methylol acrylamide = 60/38/1/1 (mass%), glass transition temperature 60°C)

Comparative Example 1

An acrylic milky-white plate of 2 mm in thickness, 58% in transmittance, 1 anisotropic degree and 93% haze was installed on a light source of 17-inch 8 direct type lamps (3mm in diameter of lamp) and, thereon, a diffusion film (GM3 made by Kimoto Co., Ltd.) and a prism sheet (BEF made by 3M Inc.) were arranged to make a surface light source. Here, the distance between the lamp and the acrylic milky-white plate was set equal to the distance between the lamp and the transparent acrylic plate in Examples 1 to 3. The uneven brightness was 3% and the front brightness was 400cd/m$^2$, which were inferior to the Examples.

Comparative Example 2

Polyethylene terephthalate (PET/I, glass transition temperature 75°C, intrinsic viscosity 0.59dl/g) where 17mol of isophthalic acid containing 0.1mass% spherical silica of 0.3$\mu$m in average particle diameter was copolymerized from an auxiliary extruder, and polyethylene terephthalate (PET, glass transition temperature 75°C) containing 0.1mass% spherical silica of 0.3$\mu$m in average particle diameter from a main extruder, were carried out melt two-layered co-extrusion, so that the lamination thickness ratio was (PET/I)/PET = 1/4. Then, a two-layered lamination sheet was made by cooling on a mirror-finished casting drum according to the electrostatic casting method. Thus, the obtained two-layered lamination sheet was simultaneously and biaxially stretched in three times in the longitudinal and transverse direction at 110°C and, thereafter, heat treatment was conducted at 220°C and during 15sec, to obtain a polyester film of 250$\mu$m in the whole of thickness of the film.

On the PET/I lamination surface of the obtained polyester film, a stripe-shaped convex lens of 0.75 in aspect ratio was transferred and molded at a heating temperature of 110°C and at a cooling temperature of 20°C by using a die of corresponding shape. Here, the half distance a of the distance between the apexes of the projecting parts was 50$\mu$m, the height b of the projecting parts was 37.5$\mu$m and the distance c of a flat part adjacent to the stripe-shaped convex lens was 0 $\mu$m.

A transparent acrylic plate of 1mm in thickness was installed on a light source of 17-inch 8 direct lamps (3mm in diameter of lamp), and the obtained anisotropic film was installed thereon(shape provinding surface being opposite to the light source) so that the strip and the lamp direction was parallel, and thereon, a diffusion film (GM3 made by Kimoto Co., Ltd.) and a prism sheet (BEF made by 3M Inc.) were arranged to create a surface light source. The front brightness of the obtained surface light source was high as 420cd/m$^2$, and the uneven brightness was 5%.

In addition, the change of transmittance of the obtained anisotropic diffusion film after heat air treatment at 80°C and during 500 hours was confirmed to be 5%, which is significantly different from the initial film.

Industrial Applicability

The anisotropic diffusion film of the present invention is suitable for display devices, for example, personal computer, television set, portable phone and so on, and especially for the surface light source used for planar display device such as liquid crystal display devices or the like, and presents a large industrial applicability.

**Claims**

1. An anisotropic diffusion film, in which a stripe-shaped convex lens is formed on one surface of a substrate film, wherein the cross sectional shape of a plane which is vertical to the stripe direction satisfies the following conditions that a) to c), and the whole of light transmittance is 70% or higher, and

   a). the contour of the projecting part of the cross sectional shape is a curved line.
   b). the aspect ratio of the projecting part of the cross sectional shape is 1 or more but not more than 3, and
   c). the distance between the apexes of the adjacent projecting parts of the cross sectional shape is 10 $\mu$m or more but not more than 100 $\mu$m.

2. The anisotropic diffusion film of claim 1, wherein the substrate film is made of polyester.

3. The anisotropic diffusion film of claim 1, wherein the distance of a flat part between adjacent projecting parts of the cross section shape is not more than 3 $\mu$m.

4. The anisotropic diffusion film of claim 1, wherein the stripe-shaped convex lens is made of polyester.

5. The anisotropic diffusion film of claim 1, wherein the change rate of the whole of light transmittance after hot air treatment at 80°C and during 500hours is not more than 3%.

EP 1 767 962 A1

Fig. 2

## INTERNATIONAL SEARCH REPORT

| | International application No. |
|---|---|
| | PCT/JP2005/010836 |

| A. CLASSIFICATION OF SUBJECT MATTER |
|---|
| Int.Cl⁷  G02B5/02, G02F1/1335 |

According to International Patent Classification (IPC) or to both national classification and IPC

| B. FIELDS SEARCHED |
|---|
| Minimum documentation searched (classification system followed by classification symbols) |
| Int.Cl⁷  G02B5/02, G02F1/1335 |

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 11-142622 A  (Dainippon Printing Co., Ltd.),<br>28 May, 1999 (28.05.99),<br>Full text; all drawings<br>(Family: none) | 1-4<br>5 |
| Y<br>A | EP 1241402 A1  (NITTO DENKO CORP.),<br>18 September, 2002 (18.09.02),<br>Full text; all drawings<br>& JP 2002-277615 A | 1-4<br>5 |
| Y<br>A | JP 2002-62528 A  (Keiwa Kabushiki Kaisha),<br>28 February, 2002 (28.02.02),<br>Full text; all drawings<br>(Family: none) | 1-4<br>5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 September, 2005 (27.09.05) | 11 October, 2005 (11.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| | International application No. |
|---|---|
| | PCT/JP2005/010836 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 7-198911 A  (Sekisui Chemical Co., Ltd.),<br>01 August, 1995 (01.08.95),<br>Full text; all drawings<br>(Family: none) | 1-4<br>5 |
| Y<br>A | JP 8-335044 A  (Dainippon Printing Co., Ltd.),<br>17 December, 1996 (17.12.96),<br>Full text; all drawings<br>(Family: none) | 1-4<br>5 |
| Y<br>A | JP 2000-182418 A  (Kuraray Co., Ltd.),<br>30 June, 2000 (30.06.00),<br>Full text; all drawings<br>(Family: none) | 1-4<br>5 |
| A | JP 2002-107510 A  (Keiwa Kabushiki Kaisha),<br>10 April, 2002 (10.04.02),<br>Full text; all drawings<br>(Family: none) | 1-5 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002062528 A
- JP 2002098810 A
- JP 2002107510 A